# EUROPEAN PATENT SPECIFICATION

(11) **EP 3 146 791 B1**
(45) Date of publication and mention of the grant of the patent: **13.11.2019**
(21) Application number: 15730873.5
(22) Date of filing: 19.05.2015
(51) Int. Cl.: H04W 48/18, H04W 76/18, H04W 48/12

(54) **TECHNIQUES FOR MANAGING PARAMETERS USED BY TERMINAL DEVICES IN ACCESS NETWORK SELECTION AND/OR TRAFFIC STEERING OR ROUTING PROCEDURES**
VERFAHREN ZUR VERWALTUNG VON PARAMETERN FÜR ENDGERÄTEVORRICHTUNGEN BEI DER ZUGANGSNETZWERKAUSWAHL UND/ODER BEI DATENVERKEHRSLENKUNGS- ODER -ROUTINGVERFAHREN
PROCÉDÉS DE GESTION DE PARAMÈTRES UTILISÉS PAR DES DISPOSITIFS TERMINAUX DANS DES PROCÉDURES DE SÉLECTION DE RÉSEAU D'ACCÈS ET/OU DE ROUTAGE OU DE PILOTAGE DE TRAFIC

(30) Priority: 19.05.2014 US 201462000219 P
(43) Date of publication of application: 29.03.2017
(73) Proprietor: Telefonaktiebolaget LM Ericsson (publ), 164 83 Stockholm (SE)
(72) Inventor: TAN BERGSTRÖM, Mattias, SE-120 71 Stockholm (SE); TEYEB, Oumer, SE-171 44 Solna (SE)
(74) Representative: Zacco Sweden AB
(86) International application number: PCT/SE2015/050556
(87) International publication number: WO 2015/178831

(56) References cited:
- BROADCOM CORPORATION: "Some Considerations for developing RAN rules for WLAN/3GPP Radio Interworking", 3GPP DRAFT; R2-142071-FRAMEWORK FOR RAN RULES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 10 May 2014 (2014-05-10), XP050818734, Retrieved from the Internet: URL:http://www.3gpp.org/ftp/tsg_ran/WG2_RL 2/TSGR2_86/Docs/ [retrieved on 2014-05-10]
- ERICSSON: "Introduction of WiFi/3GPP Radio interworking support in RRC", 3GPP DRAFT; 36331_CRYYYY_(REL-12)_R2-142717 INTRODUCTION OF WIFI3GPP RADIO INTERWORKING SUPPORT IN RRC, 3RD GENERATION PARTNERSHIP PROJECT (3GPP), MOBILE COMPETENCE CENTRE ; 650, ROUTE DES LUCIOLES ; , vol. RAN WG2, no. Seoul, South Korea; 20140519 - 20140523 15 May 2014 (2014-05-15), XP050818977, Retrieved from the Internet: URL:http://www.3gpp.org/ftp/tsg_ran/WG2_RL 2/TSGR2_86/Docs/ [retrieved on 2014-05-15]
- INTEL CORPORATION: "TP for 25.300 on WLAN/3GPP radio interworking", 3GPP DRAFT; R2-142135 TP FOR 25 300 ON WLAN-3GPP IWK-V5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, Korea; 20140519 - 20140523 9 May 2014 (2014-05-09), XP050818355, Retrieved from the Internet: URL:http://www.3gpp.org/ftp/tsg_ran/WG2_RL 2/TSGR2_86/Docs/ [retrieved on 2014-05-09]
- ALCATEL-LUCENT ET AL: "Discussion on framework for selection of 3GPP/WiFi interworking method including OPI definition", 3GPP DRAFT; S2-141104_DISCUSSION IN OPI IN ANDSF BASED SOLUTION_V1CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. SA WG2, no. St. Julian; 20140324 - 20140328 19 March 2014 (2014-03-19), XP050835709, Retrieved from the Internet: URL:http://www.3gpp.org/ftp/tsg_sa/WG2_Arc h/TSGS2_102_Malta/Docs/ [retrieved on 2014-03-19]
- BROADCOM CORPORATION: "Signalling aspects for WLAN/3GPP in E-UTRA", 3GPP DRAFT; R2-142064 _WIFI_IWK_ LTE_ASPECTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 10 May 2014 (2014-05-10), XP050818727, Retrieved from the Internet: URL:http://www.3gpp.org/ftp/tsg_ran/WG2_RL 2/TSGR2_86/Docs/ [retrieved on 2014-05-10]
- ERICSSON: "Handling of RAN assistance parameters", 3GPP DRAFT; R2-142369 - HANDLING OF RAN ASSISTANCE PARAMETERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 10 May 2014 (2014-05-10), XP050818812, Retrieved from the Internet: URL:http://www.3gpp.org/ftp/tsg_ran/WG2_RL 2/TSGR2_86/Docs/ [retrieved on 2014-05-10]

## Description

### Technical Field

The present disclosure generally relates to communication networks, and more particularly relates to techniques for managing the parameters used by terminal devices in access network selection and/or traffic steering or routing procedures between networks operating according to different radio access technologies, RATs.

### Background

The wireless local-area network (WLAN) technology known as "Wi-Fi" has been standardized by IEEE in the 802.11 series of specifications (i.e., as "IEEE Standard for Information technology-Telecommunications and information exchange between systems. Local and metropolitan area networks-Specific requirements. Part 11: Wireless LAN Medium Access Control (MAC) and Physical Layer (PHY) Specifications*"*). As currently specified, Wi-Fi systems are primarily operated in the 2.4 GHz or 5 GHz bands.

The IEEE 802.11 specifications regulate the functions and operations of the Wi-Fi access points or wireless terminals, collectively known as "stations" or "STA," in the IEEE 802.11, including the physical layer protocols, Medium Access Control (MAC) layer protocols, and other aspects needed to secure compatibility and inter-operability between access points and portable terminals. Because Wi-Fi is generally operated in unlicensed bands, communication over Wi-Fi may be subject to interference sources from any number of both known and unknown devices. Wi-Fi is commonly used as wireless extensions to fixed broadband access, e.g., in domestic environments and in so-called hotspots, like airports, train stations and restaurants.

Recently, Wi-Fi has been subject to increased interest from cellular network operators, who are studying the possibility of using Wi-Fi for purposes beyond its conventional role as an extension to fixed broadband access since many of today's portable wireless devices (referred to hereinafter as "user equipments", "UEs", or more generally "terminal devices") support Wi-Fi in addition to one or several 3^{rd}-Generation Partnership Project (3GPP) cellular technologies. These operators are responding to the ever-increasing market demands for wireless bandwidth, and are interested in using Wi-Fi technology as an extension of, or alternative to, cellular radio access network technologies. Cellular operators that are currently serving mobile users with, for example, any of the technologies standardised by 3GPP, including the radio-access technologies known as Long-Term Evolution (LTE), Universal Mobile Telecommunications System (UMTS)/Wideband Code-Division Multiple Access (WCDMA), High Speed Packet Access (HSPA) and Global System for Mobile Communications (GSM), see Wi-Fi as a wireless technology that can provide good additional support for users in their regular cellular networks.

It is currently discussed in 3GPP how 3GPP Radio Access Technologies (RATs) can be integrated and/or interwork with WLAN. The focus of this work is how to perform access network selection and/or traffic steering or routing between 3GPP and WLAN.

3GPP is currently working on specifying a feature or mechanism for enabling WLAN/3GPP Radio Interworking which improves control by the cellular network operator of how a UE performs access network selection and/or traffic steering or routing between 3GPP and WLANs belonging to the cellular network operator or its partners (and possibly also other, non-operator, WLANs as well).

It has been discussed that for this mechanism the radio access network (RAN), which is part of the 3GPP-standardsed communication network, provides information in the form of assistance parameters (parameter values) to the UE that help the UE and/or dictate how the UE shall perform access network selection and/or traffic steering. This 'RAN assistance information' may comprise three main components, namely: threshold values, an offload preference indicator (OPI) and WLAN identifiers (which identify specific WLANs or WLAN access points (APs). The UE is also provided with RAN rules/policies that make use of this assistance information/parameters. It should be noted that in some descriptions of the interworking mechanism the WLAN identifiers are not considered as being 'RAN assistance information' and instead may just be referred to as WLAN identifiers. It should also be noted that the 'RAN assistance information' is sometimes alternatively referred to herein and in the art as 'RAN assistance parameters', 'WLAN parameters', 'WLAN traffic steering information', 'WLAN traffic steering parameters', 'WLAN access network selection parameters', 'WLAN access network selection information', etc., but it will be appreciated that these terms generally refer to any information or parameters that could be used to influence, affect or control a terminal device's behaviour in respect of mobility between networks operating according to different RATs.

The threshold values could be for example for metrics such as 3GPP signal related metrics such as reference signal received power (RSRP) and reference signal received quality (RSRQ) in LTE or common pilot channel (CPICH) received signal code power (RSCP) and CPICH Ec/No in HSPA, WLAN signal related metrics such as Received Signal Strength Indicator (RSSI), Received Channel Power Indicator (RCPI), Received Signal to Noise Indicator (RSNI), WLAN load/utilisation, WLAN backhaul load/capacity, etc.

An example of a RAN rule that uses threshold values is that the UE should connect to a WLAN if the RSRP of a signal from the 3GPP network is below the signalled RSRP threshold at the same time as the RCPI of a signal from the WLAN network is above the signalled RCPI threshold. A similar rule and/or appropriate threshold values can be specified for controlling when the UE should steer traffic back from WLAN to 3GPP. The RAN rule may be specified in a 3GPP specification such as TS 36.304 ("Evolved Universal Terrestrial Radio Access (E-UTRA); User Equipment (UE) procedures in idle mode") and/or TS 36.331 v12.1.0 (Evolved Universal Terrestrial Radio Access (E-UTRA); Radio Resource Control (RRC); Protocol specification).

With the above mechanism it is likely not desirable, or maybe not even feasible, for the terminal device (UE) to consider any WLAN when deciding where to steer traffic. For example, it may not be feasible for the terminal device to use this mechanism to decide to steer traffic to a WLAN that does not belong to the 3GPP network operator. Thus it has been proposed that the RAN should also indicate to the terminal device which WLANs the mechanism should be applied to by sending a set of WLAN identifiers for appropriate WLANs.

The RAN may also provide parameters which are used in Access Network Discovery and Selection Function (ANDSF) policies. One proposed parameter is the offloading preference indicator (OPI). One possibility for OPI is that it is compared to a threshold in the ANDSF policy to trigger different actions, while another possibility is that OPI is used as a pointer to point, and select, different parts of the ANDSF policy which would then be used by the terminal device.

The RAN assistance parameters (i.e. thresholds, WLAN identifiers, OPI) provided by the RAN to the terminal device may be provided to the terminal device using dedicated signalling and/or broadcast signalling. In some cases, a RAN may provide different RAN assistance information or parameter values over dedicated signalling to those sent using broadcast signalling. Thus, it may be possible for a terminal device to receive device-specific RAN assistance information through dedicated signalling. These 'dedicated parameters' can only be sent to the terminal device when the terminal device has a valid radio resource control (RRC) connection to the 3GPP RAN. A terminal device that has received dedicated parameters should apply dedicated parameters in the access network selection and/or traffic steering procedure; otherwise the terminal device should apply the 'broadcast parameters' (i.e. those received over broadcast signalling). If there is no established RRC connection between the terminal device and the RAN, the terminal device cannot receive dedicated parameters.

In some scenarios, it may be suitable for the terminal device to continue to apply dedicated parameters which have been received from the RAN after the RRC connection has been terminated. In particular, it has been agreed that a terminal device which is in IDLE mode (in an LTE RAN) shall apply dedicated parameters for a time period (time T350) after the terminal device has moved to RRC IDLE. After the timer T350 has expired, the terminal device will start applying or using broadcast parameters in the access network selection and/or traffic steering procedure. It should be noted that although the above example (and other examples described herein) is based on an LTE network, it is also applicable to other RATs. For example, in UMTS there is a "Connected" state which is divided into several substates, with some states being more similar to IDLE mode than to CONNECTED mode in LTE. Thus it should be appreciated that even though the following description may refer to the terminal device applying a certain procedure when the terminal device is in a certain state in a certain RAT, the application of this procedure is not limited to that state in that RAT.

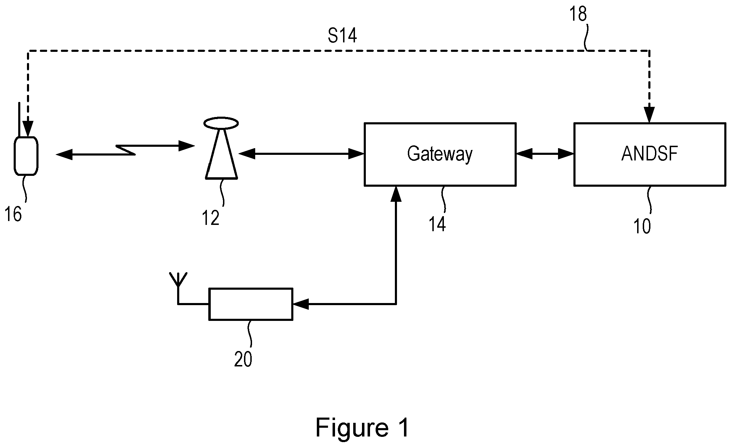

ANDSF, which has been mentioned above, is an entity defined by 3GPP for providing access discovery information as well as mobility and routing policies to the UE. ANDSF is described in Release 8 of 3GPP TS 23.402 (See "Architecture Enhancements for non-3GPP Accesses," 3GPP TS 23.402, v. 11.4.0 (Sept. 2012), available at www.3gpp.org). A simplified ANDSF architecture is depicted in Figure 1. As shown in the figure, the ANDSF server 10 is provided that is added to a 3GPP network (that comprises one or more base stations (eNodeBs (eNBs)) 12 and a gateway (GW) 14) and is connected to the UE 16, and its main goal is to provide the UE 16 with access network information in a resource efficient and secure manner. The communication between the UE 16 and the ANDSF server 10 is defined as an IP-based S14-interface 18. A Wi-Fi AP 20 is also shown in Figure 1, with the AP 20 being connected to the GW 14.

By supplying information about both available 3GPP and non-3GPP access networks to the UE (terminal device) 16, the ANDSF server 10 enables an energy-efficient mechanism of network discovery, where the UE 16 can avoid continuous and energy-consuming background scanning. Furthermore, the ANDSF provides the mobile operators with a tool for the implementation of UE traffic steering of access selection mechanisms, where policy can guide UEs 16 to select one particular radio access network (RAN) over another.

In 3GPP, it has been agreed that ANDSF should be enhanced for Release-12 to use the thresholds and OPI parameters that are communicated to the UE, and that if enhanced ANDSF policies are provided to the UE, the UE will use the ANDSF policies instead of the RAN rules/policies (i.e. ANDSF has precedence).

Broadcom Corporation document titled "some considerations for developing RAN rules for WLAN/3GPP radio interworking" aims to support WLAN/3GPP radio interworking both with and without ANDSF to satisfy different operator deployments.

Ericcsson: "introduction of WiFi/3GPP radio interworking support in RRC", 3GPP Draft introduces support for WLAN/3GPP radio interworking in RRC.

### Summary

The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention. It has been discussed in the 3GPP RAN2 working group about the handling of dedicated RAN assistance parameters (i.e. RAN assistance parameters provided to a UE using dedicated signalling) that a UE has received from a source eNB (or a radio network controller (RNC) in the case of a UMTS network) during handover and cell reselections. The 'source' eNB is the network node with which the UE was associated before the handover or cell reselection.

The current agreement is that when the UE goes to IDLE mode, it continues to apply the dedicated parameters/thresholds until a configurable time T350 has elapsed since the UE went into IDLE mode. After the expiration of the timer (T350), the UE will discard the dedicated thresholds and will start using parameters or thresholds received over broadcast signalling.

When it comes to handovers, which are initiated and controlled by the RAN when the UE is in a connected mode (e.g. there is an active voice call or data session), the dedicated thresholds that the UE is using can be signalled from the source eNB to the target eNB (i.e. the eNB with which the UE will be associated on completion of the handover), and the target eNB can either decide to allow the UE to continue using the dedicated thresholds received from the source eNB/source cell, or send the UE new thresholds that are appropriate for the target cell.

When it comes to cell reselections, which are initiated by the UE when the UE is in e.g. an idle mode (e.g. no active voice calls or data sessions), and before the timer has expired, the UE behaviour has not yet been agreed upon and there are two possibilities:
1. The UE should discard dedicated thresholds and start using broadcast thresholds in the new (target) cell, even if the timer has not yet expired.
2. The UE should continue using the dedicated thresholds in the new (target) cell, as long as the timer has not expired.

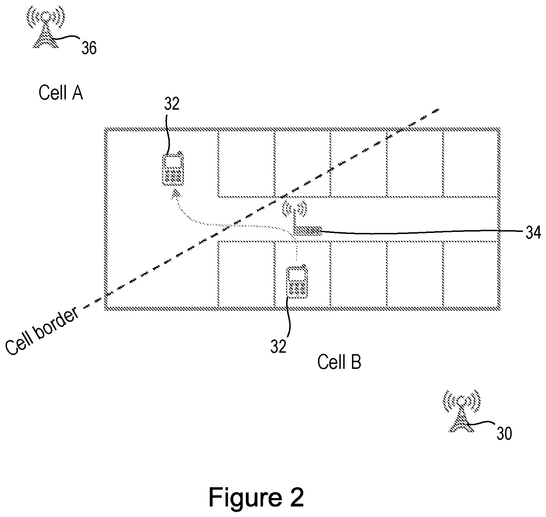

Consider an office-environment scenario as shown in Figure 2. While in a Cell B (controlled by eNB 30), a UE 32 receives RAN assistance information/thresholds from Cell B which leads to the UE 32 steering traffic to WLAN 34. As the traffic is steered to WLAN 34, the UE 32 becomes inactive in the cellular 3GPP network and is therefore sent to IDLE mode in the E-UTRA network (E-UTRAN) or, for example, CELL_PCH/URA_PCH/IDLE in a Universal Terrestrial Radio Access Network (UTRAN). Provided the UE 32 remains in Cell B, the UE 32 will retain and use the dedicated thresholds for the timer period T, e.g. 30 minutes.

However, consider what happens if the UE 32 moves towards a different part of the office environment and performs a cell reselection to Cell A (controlled by eNB 36). If the UE 32 is to discard the thresholds it maintains (i.e. according to option 1 above), the UE 32 would start applying the broadcast thresholds that are broadcast in Cell A, even though the timer (e.g. 30 minutes) from when the UE entered IDLE mode has not yet expired. This may mean that the UE 32 moves back to the 3GPP network (Cell A) after which Cell A may likely steer the UE 32 back to WLAN 34. This 'ping-ponging' between the 3GPP networks and WLAN will result in both service interruption and additional signalling and hence will negatively affect user experience and system performance and unnecessarily consume UE battery power.

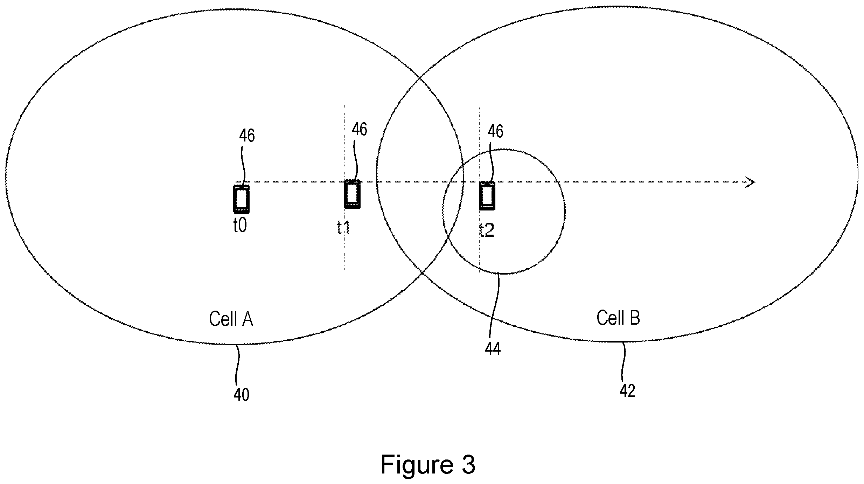

The second option described above would mitigate the problems with option 1. However, the second option has its own drawbacks, which are described below with reference to Figure 3. Figure 3 illustrates two neighbouring cells, Cell A 40 and Cell B 42 and a WLAN 44 that is within the coverage area of Cell B 42. The position of a UE 46 is shown at three different time instants, t0, t1 and t2.

At time t0 the UE 46 is in connected mode in Cell A 40. Assume that Cell A 40 is very lightly loaded and it has provided the UE 46 with a very high RSSI threshold (or/and a very low RSRP threshold) to offload to WLAN (i.e. the threshold(s) mean that there is less likelihood to offload to WLAN). At time t1, due to inactivity, the UE 46 goes to IDLE mode, and the T350 timer is started according to the discussion above. Before this timer expires, the UE 46 reselects Cell B 42. Assume that Cell B 42 is over- or highly-loaded and has no resources to admit any new users and as such it is using very aggressive WLAN offloading thresholds (e.g. a low RSSI threshold and/or a high RSRP threshold to increase the likelihood of WLAN offloading). At time t2, before T350 has expired, the UE 46 requests to access some service (e.g. a voice call or data session). Under option 2 above, the UE 46 continues using the dedicated thresholds received in Cell A while operating in Cell B until the timer expires. Thus, according to the thresholds provided in Cell A 40, the 3GPP network (i.e. Cell B 42) is the best access link, and thus the UE 46 will try to establish an RRC connection towards Cell B 42. However, as Cell B 42 is overloaded, it will reject the RRC connection setup request from the UE 46. So, even though the UE 46 is now within the coverage area of WLAN 44, it will not be able to access the service via WLAN 44 due to the dedicated thresholds received from Cell A that discourage use of a WLAN. Thus, the UE 46 can end up being denied access to any data service (i.e. 3GPP or WLAN) until T350 expires or the load conditions in Cell B 42 improve and Cell B 42 can admit the UE 46.

The problems set out above can be summarised as follows. A terminal device that is capable of WLAN/3GPP radio interworking (i.e. using an access network selection and/or traffic steering mechanism to select between 3GPP and WLAN) may receive dedicated parameters from a first 3GPP cell (which may have been lightly loaded) which are utilised when the terminal device is in a second 3GPP cell (which may be heavily loaded). These dedicated parameters may not be suitable to use in the second cell as the parameters may have been set based on the load situation and/or dependent on other characteristics of the first cell and hence may not be suitable to be used in the second cell. In this case a terminal device may (repeatedly) attempt to establish a connection to the second cell which may reject it due to its high load situation, and hence signalling load in the second cell will be increased which is bad from a system performance point of view. At the same time the opportunity for the terminal device to receive suitable parameters to be used in the second cell may be missed.

A similar problem could arise even without cell reselection having to occur if longer (or sufficiently long) T350 values are employed and/or if the conditions in the cell the UE 46 is camping on change drastically. For example, the UE 46 can still be in the coverage area of Cell A 40 at time t2 (when it is also still in IDLE mode), but the cell might have become overloaded at that time, thereby resulting in the same outcome as in the case of cell reselection described above, i.e. the UE 46 attempts to establish a connection to Cell A 40 following the evaluation of the (outdated) dedicated parameters, and the connection request is rejected since the conditions in Cell A 40 have significantly changed.

Therefore, there is a need for improved techniques for managing parameters used by terminal devices in access network selection and/or traffic steering or routing procedures in order to prevent these undesirable situations occurring.

According to a first aspect there is provided a method of operating a terminal device in a communication network, the method comprising, on rejection of a connection request to a network node, (i) using broadcast parameters that have been broadcast from the or another network node in an access network selection and/or traffic steering or routing procedure; and/or (ii) discarding dedicated parameters that have been received from a network node using dedicated signalling, the dedicated parameters being for use in the access network selection and/or traffic steering procedure.

In some embodiments, the method comprises both steps of using broadcast parameters and discarding dedicated parameters.

In some embodiments, the method comprises the step of using broadcast parameters and further comprises storing dedicated parameters that have been received from a network node using dedicated signalling for use in the access network selection and/or traffic steering procedure on expiry of a time period or on occurrence of a certain event.

In some embodiments, prior to the step of using broadcast parameters in an access network selection and/or traffic steering procedure, the method further comprises the steps of determining if the network is broadcasting broadcast parameters or if the terminal device has broadcast parameters available for use in the access network selection and/or traffic steering procedure, and if not, applying or using dedicated parameters that have been received from a network node using dedicated signalling in the access network selection and/or traffic steering procedure.

In some embodiments, the method further comprises the step of receiving an indication from a network node indicating whether the terminal device should perform either, both or none of steps (i) and (ii) on rejection of a connection request.

According to a second aspect, there is provided a terminal device for use in a communication network, the terminal device comprising processing circuitry that is configured to, on rejection of a connection request to a network node, (i) use broadcast parameters that have been broadcast from the or another network node in an access network selection and/or traffic steering or routing procedure; and/or (ii) discard dedicated parameters that have been received from a network node using dedicated signalling, the dedicated parameters being for use in the access network selection and/or traffic steering procedure.

In some embodiments, the processing circuitry is configured to both use the broadcast parameters and discard the dedicated parameters.

In some embodiments, the processing circuitry is configured to use the broadcast parameters and to store dedicated parameters that have been received from a network node using dedicated signalling for use in the access network selection and/or traffic steering procedure on expiry of a time period or on occurrence of a certain event. The processing circuitry can be further configured to monitor for the expiry of the time period or for the occurrence of a certain event.

In some embodiments, the processing circuitry is further configured to determine if the network is broadcasting broadcast parameters or if the terminal device has broadcast parameters available for use in the access network selection and/or traffic steering procedure, and if the processing circuitry determines that the network is not broadcasting broadcast parameters or that the terminal device does not have broadcast parameters available, the processing circuitry applies or uses dedicated parameters that have been received from a network node using dedicated signalling in the access network selection and/or traffic steering procedure.

In some embodiments, the terminal device further comprises transceiver circuitry that is configured to receive an indication from a network node indicating whether the terminal device/processing circuitry should use the broadcast parameters and/or discard the dedicated parameters on rejection of a connection request.

According to a third aspect, there is provided a method of operating a network node in a communication network, the method comprising determining the desired behaviour of a terminal device with respect to an access network selection and/or traffic steering procedure in the event that a connection request by the terminal device to a network node is rejected; and providing an indication of the desired behaviour to the terminal device.

In some embodiments, the behaviour comprises applying or not applying broadcast parameters that have been broadcast from the or another network node in an access network selection and/or traffic steering or routing procedure; and/or discarding or not discarding dedicated parameters that have been received from a network node using dedicated signalling, the dedicated parameters being for use in the access network selection and/or traffic steering procedure.

In some embodiments, the indication is provided in dedicated signalling. In other embodiments, the indication is provided in broadcast signalling. In some embodiments, the indication is included in a rejection message of the connection request.

According to a fourth aspect, there is provided a network node for use in a communication network, the network node comprising processing circuitry configured to determine the desired behaviour of a terminal device with respect to an access network selection and/or traffic steering procedure in the event that a connection request by the terminal device to a network node is rejected; and an interface or transceiver circuitry for providing an indication of the desired behaviour to the terminal device.

In some embodiments, the behaviour comprises applying or not applying broadcast parameters that have been broadcast from the or another network node in an access network selection and/or traffic steering or routing procedure; and/or discarding or not discarding dedicated parameters that have been received from a network node using dedicated signalling, the dedicated parameters being for use in the access network selection and/or traffic steering procedure.

In some embodiments, the indication is provided in dedicated signalling. In other embodiments, the indication is provided in broadcast signalling. In some embodiments, the indication is included in a rejection message of the connection request.

According to a fifth aspect, there is provided a computer program product having computer readable code embodied therein, the computer readable code being configured such that, on execution of the computer readable code by a computer or suitable processing circuitry, the computer or suitable processing circuitry is caused to perform any of the methods described above.

### Brief Description of the Drawings

Features, objects and advantages of the presently disclosed techniques will become apparent to those skilled in the art by reading the following detailed description where references will be made to the appended figures in which:
Figure 1 is a block diagram of a simplified ANDSF architecture;
Figure 2 illustrates a scenario in which a UE moves from the coverage area of one 3GPP cell to another;
Figure 3 illustrates another scenario in which a UE moves from the coverage area of one 3GPP cell to another;
Figure 4 is a diagram illustrating the overall architecture of an LTE network;
Figure 5 illustrates part of an LTE network and a Wi-Fi network;
Figure 6 is a block diagram of an exemplary terminal device according to several embodiments;
Figure 7 is a block diagram of an exemplary network node according to several embodiments;
Figure 8 is a flow chart of a method of operating a terminal device according to a first specific embodiment;
Figure 9 is a signalling diagram showing the signals associated with the method of Figure 8.
Figure 10 is a flow chart of a method of operating a terminal device according to a second specific embodiment;
Figure 11 is a signalling diagram showing the signals associated with the method of Figure 10.
Figure 12 is a flow chart of a method of operating a terminal device according to a general embodiment;
Figure 13 is a flow chart of a method of operating a network node to configure the operation of a terminal device when a connection request is rejected; and
Figure 14 is a flow chart of a method of operating a terminal device to configure the operation of the terminal device when a connection request is rejected.

### Detailed Description

In the discussion that follows, specific details of particular embodiments of the present teaching are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not obscure the description with unnecessary detail. Those skilled in the art will appreciate that the functions described may be implemented in one or in several nodes. Some or all of the functions described may be implemented using hardware circuitry, such as analog and/or discrete logic gates interconnected to perform a specialized function, application-specific integrated circuits (ASICs), programmable logic arrays (PLAs), digital signal processors (DSPs), reduced instruction set processors, field programmable gate arrays (FPGAs), state machines capable of performing such functions, etc. Likewise, some or all of the functions may be implemented using software programs and data in conjunction with one or more digital microprocessors or general purpose computers. Where nodes that communicate using the air interface are described, it will be appreciated that those nodes also have suitable radio communications circuitry. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations of the present teachings may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

The discussion that follows frequently refers to "terminal devices", although other generally equivalent terms such as "mobile devices", "communication devices", "mobile stations" and particularly "UEs" - which is a 3GPP term for end user wireless devices - may also be used. It should be appreciated, however, that the techniques and apparatus described herein are not limited to 3GPP UEs (i.e. UEs or terminal devices that are capable of operating according to one or more 3GPP standardised technologies), but are more generally applicable to end user wireless devices (e.g., portable cellular telephones, smartphones, wireless-enabled tablet computers, target devices, device-to-device (D2D) UEs, machine-type UEs or UEs capable of machine-to-machine (M2M) communication, laptop embedded equipment (LEE), laptop mounted equipment (LME), Universal Serial Bus (USB) dongles, etc.) that are useable in cellular systems and that are capable of communicating with a radio access network (RAN) using one or multiple carriers or cells (e.g. known as a carrier aggregation (CA) mode in LTE). It should also be noted that the current disclosure relates to end user terminal devices that support one or more wide-area cellular technologies, such as any of the wide-area radio access standards maintained by 3GPP, and a wireless local area network (WLAN) technology, such as one or more of the IEEE 802.11 standards. End user devices are referred to in Wi-Fi documents as "stations," or "STA" - it should be appreciated that the term "UE" or "terminal device" as used herein should be understood to refer to a STA, and vice-versa, unless the context clearly indicates otherwise. It should also be noted that the current disclosure also relates to end user wireless devices that support both a wide-area cellular technology, such as any of the wide-area radio access standards maintained by 3GPP, and a non-3GPP standardized RAT.

The term 'radio network node' or 'network node' is used herein and should be understood as referring to any type of network node serving a UE and/or that is connected to another network node or network element or any radio node from where a UE receives a signal or message. Examples of a network node or terms for describing a network node include NodeB, base station (BS), multi-standard radio (MSR) radio node such as MSR BS, eNodeB, network controller, radio network controller (RNC), base station controller (BSC), relay, donor node controlling relay, base transceiver station (BTS), access point (AP), wireless router, transmission points, transmission nodes, remote radio unit (RRU), remote radio head (RRH), nodes in distributed antenna system (DAS), core network node, mobility management entity (MME), ANDSF server, etc.

In addition to the above, it will be appreciated that the term "base station" (and thus also "network node") comprises in a general sense any node transmitting radio signals in the downlink (DL) to a terminal device and/or receiving radio signals in the uplink (UL) from the terminal device. Some example base stations are eNodeB, eNB, Node B, macro-/micro-/pico-/femto-cell radio base station, home eNodeB (also known as a femtocell base station), relay, repeater, sensor, transmitting-only radio nodes or receiving-only radio nodes. A base station may operate or at least perform measurements in one or more frequencies, carrier frequencies or frequency bands and may itself be capable of carrier aggregation. It may also be a single-radio access technology (RAT), multi-RAT, or multi-standard node, e.g., using the same or different base band modules for different RATs.

The signalling between the terminal devices and the network nodes (e.g. a base station or another node in the RAN or core network) described below is either via direct links or logical links (e.g. via higher layer protocols and/or via one or more other network nodes). For example, signalling from a coordinating node may pass another network node, e.g., a radio node.

It will be appreciated that, as used herein, the 3GPP RATs include any one or more of the technologies standardised by the 3rd-Generation Partnership Project (3GPP), including the radio-access technologies known as Long-Term Evolution (LTE), Universal Mobile Telecommunications System (UMTS)/Wideband Code-Division Multiple Access (WCDMA), High Speed Packet Access (HSPA), Code Division Multiple Access 2000 (CDMA2000), Global System for Mobile Communications (GSM), GSM Enhanced Data rates for GSM Evolution (EDGE) Radio Access Network (GERAN). A "WLAN", as used herein, may comprise of any type of wireless LAN such as Wi-Fi, WiMAX or compliant to any IEEE 802.11 standard etc.

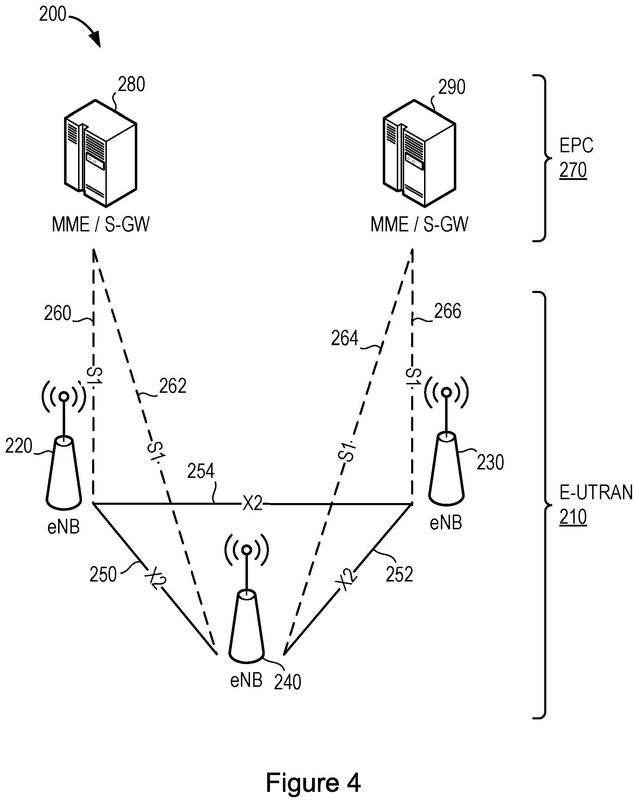

Overall E-UTRAN architecture - An exemplary Evolved UMTS (Universal Mobile Telecommunications System) Terrestrial Radio Access Network (E-UTRAN) architecture is shown in Figure 4. The E-UTRAN architecture 210 consists of base stations 220, 230, 240 called enhanced NodeBs (eNBs or eNodeBs), which provide the E-UTRA user plane and control plane protocol terminations towards the User Equipment (UE). The eNBs 220, 230, 240 are interconnected with each other by means of the X2 interface 250, 252, 254. The eNBs 220, 230, 240 are also connected by means of the S1 interface 260, 262, 264, 266 to the EPC 270 (Evolved Packet Core), more specifically to the MME 280, 290 (Mobility Management Entity), by means of the S1-MME interface, and to the Serving Gateway 280, 290 (S-GW) by means of the S1-U interface. The S1 interface supports many-to-many relations between MMEs / S-GWs and eNBs.

The eNB 220, 230, 240 hosts functionalities such as Radio Resource Management (RRM), radio bearer control, admission control, header compression of user plane data towards the UE, and routing of user plane data towards the serving gateway. The MME 280, 290 is the control node that processes the signalling between the UE and the core network 270. The main functions of the MME 280, 290 are related to connection management and bearer management, which are handled via Non Access Stratum (NAS) protocols. The S-GW 280, 290 is the anchor point for UE mobility, and also includes other functionalities such as temporary downlink data buffering while the UE is being paged, packet routing and forwarding the right eNB 220, 230, 240, gathering of information for charging and lawful interception. The PDN (Packet Data Network) Gateway (P-GW - not shown in Figure 3) is the node responsible for UE IP address allocation, as well as Quality of Service (QoS) enforcement. The 3GPP document "Evolved Universal Terrestrial Radio Access (E-UTRA) and Evolved Universal Terrestrial Radio Access Network (E-UTRAN); Overall Description; Stage 2," 3GPP TS 36.300, v. 11.3.0 (Sept. 2012), available at www.3gpp.org, and the references therein provide details of the functionalities of the different nodes shown in Figure 4.

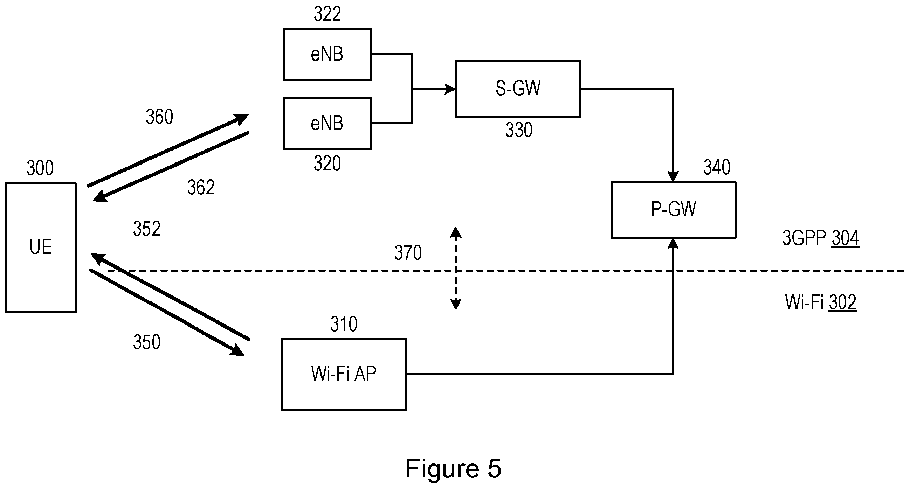

Figure 5 illustrates a network where the LTE radio access parts (eNBs) 320, 322 and a Wi-Fi wireless access point 310 are both connected to the same P-GW 340. In the case of the LTE radio access parts, the eNBs 320, 322 are connected to the P-GW 340 via an S-GW 330. A UE 300 is shown that is capable of being served both from the Wi-Fi Access Point 310 and the LTE eNBs 320, 322. Arrows 350 and 352 illustrate the uplink (UL) and downlink (DL) transmissions between the UE 300 and the Wi-Fi AP 310 respectively and arrows 360 and 362 illustrate the uplink (UL) and downlink (DL) transmissions between the UE 300 and the eNBs respectively. Figure 5 illustrates one possible way of connecting a Wi-Fi access network 302 to the same core network as the 3GPP-specified access network 304. The gateways (Trusted Wireless Access Gateway, TWAG, evolved Packet Data Gateway, ePDG, etc) between Wi-Fi AP and P-GW are omitted for simplicity. It should be noted that the presently disclosed techniques are not restricted to scenarios where the Wi-Fi access network 302 is connected in this way; the techniques can be applied to scenarios where the networks are more or completely separate.

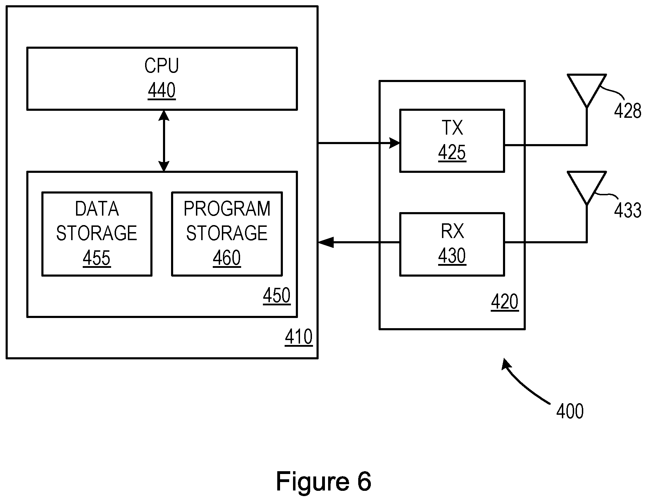

Hardware Implementations - Several of the techniques and methods described below may be implemented using radio circuitry and electronic data processing circuitry provided in a terminal device. Figure 6 illustrates features of an example terminal device 400 according to several embodiments. Terminal device 400, which may be a UE configured for operation with an LTE network (E-UTRAN) and that also supports Wi-Fi, for example, comprises a transceiver unit 420 for communicating with one or more base stations (eNBs) as well as a processing circuitry 410 for processing the signals transmitted and received by the transceiver unit 420. Transceiver unit 420 includes a transmitter circuitry 425 coupled to one or more transmit antennas 428 and receiver circuitry 430 coupled to one or more receiver antennas 433. The same antenna(s) 428 and 433 may be used for both transmission and reception. Receiver circuitry 430 and transmitter circuitry 425 use known radio processing and signal processing components and techniques, typically according to a particular telecommunications standard such as the 3GPP standards for LTE. Note also that transmitter unit 420 may comprise separate radio and/or baseband circuitry for each of two or more different types of radio access network, such as radio/baseband circuitry adapted for E-UTRAN access and separate radio/baseband circuitry adapted for Wi-Fi access. The same applies to the antennas - while in some cases one or more antennas may be used for accessing multiple types of networks, in other cases one or more antennas may be specifically adapted to a particular radio access network or networks. Because the various details and engineering tradeoffs associated with the design and implementation of such circuitry are well known and are unnecessary to a full understanding of the techniques described herein, additional details are not shown here.

Processing circuitry 410 comprises one or more processors 440 coupled to one or more memory devices 450 that comprise a data storage memory 455 and a program storage memory 460. Processor 440, identified as CPU 440 in Figure 6, may be a microprocessor, microcontroller, or digital signal processor, in some embodiments. More generally, processing circuitry 410 may comprise a processor/firmware combination, or specialised digital hardware, or a combination thereof. Memory 450 may comprise one or several types of memory such as read-only memory (ROM), random-access memory, cache memory, flash memory devices, optical storage devices, etc. Because terminal device 400 supports multiple radio access technologies, processing circuitry 410 may include separate processing resources dedicated to one or several radio access technologies, in some embodiments. Again, because the various details and engineering tradeoffs associated with the design of baseband processing circuitry for mobile devices are well known and are unnecessary to a full understanding of the techniques described herein, additional details are not shown here.

Typical functions of the processing circuitry 410 include modulation and coding of transmitted signals (possibly in conjunction with the transmitter circuitry 425) and the demodulation and decoding of received signals (possibly in conjunction with the receiver circuitry 430). In several embodiments, processing circuitry 410 is adapted, using suitable program code stored in program storage memory 460, for example, to carry out any of the embodiments described below. Of course, it will be appreciated that not all of the steps of these embodiments are necessarily performed in a single microprocessor or even in a single module.

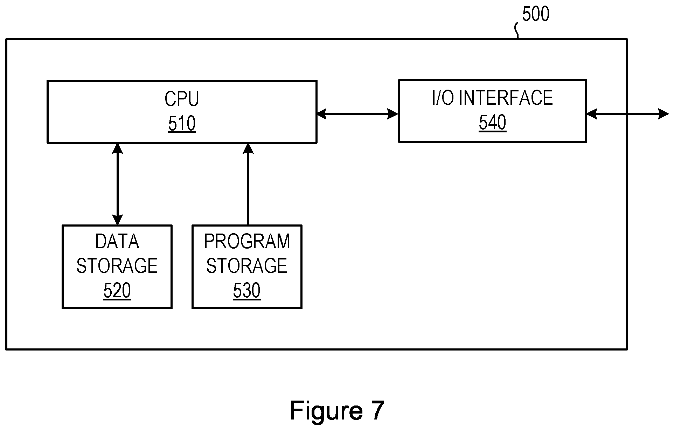

Similarly, several of the techniques and processes described herein can be implemented in a network node, such as an eNodeB or other node in a 3GPP network. Figure 7 is a schematic illustration of a node 500 in which a method embodying any of the presently described network-based techniques can be implemented. A computer program for controlling the node 500 to carry out a method according to any of the relevant embodiments can be stored in a program storage 530, which can be one or several memory devices. Data used during the performance of a method according to the embodiments can be stored in a data storage 520, which can also be one or more memory devices. During performance of a method embodying the present techniques, program steps can be fetched from the program storage 530 and executed by processing circuitry 510 (that is illustrated as a Central Processing Unit (CPU)), retrieving data as required from the data storage 520. Output information resulting from performance of a method embodying the presently-described techniques can be stored back in the data storage 520, or sent to an Input/Output (I/O) interface/module 540. I/O interface or module 540 may be or include a network interface for sending and receiving data to and from other network nodes (e.g. other eNodeBs or a node in the core network such as an MME or S-GW) and/or radio transceiver circuitry and antenna(s) for communicating with one or more terminal devices over the air interface.

Accordingly, in various embodiments, processing circuitry, such as the CPU 510 in Figure 7, are configured to carry out one or more of the techniques described in detail below. Likewise, other embodiments include radio network controllers including such processing circuitry. In some cases, the processing circuitry is configured with appropriate program code, stored in one or more suitable memory devices, to implement one or more of the techniques described herein. Of course, it will be appreciated that not all of the steps of these techniques are necessarily performed in a single microprocessor or even in a single module.

As described above, a terminal device that is capable of WLAN/3GPP radio interworking (i.e. using an access network selection and/or traffic steering mechanism to select between 3GPP and WLAN) may receive dedicated parameters from a first 3GPP cell that may subsequently be utilised when the terminal device is in a second 3GPP cell. These dedicated parameters may not be suitable for use in the second cell since the parameters may have been set based on the load situation and/or dependent on other characteristics of the first cell that do not apply to the second cell. In this case, following an evaluation of the dedicated parameters, a terminal device may (repeatedly) attempt to establish a connection to the second cell, and this/these request(s) may be rejected due to its high load situation. These requests and rejections increase signalling load in the second cell which is undesirable from a system performance point of view (particularly since the second cell is already highly loaded). At the same time the opportunity for the terminal device to receive suitable parameters to be used in the second cell may be missed. Various solutions to these problems are presented below.

As noted above, terminal devices can receive dedicated parameters for use in performing access network selection and/or traffic steering between a cellular communication network (e.g. a 3GPP standardised network) and a WLAN. As noted above, these parameters are also known as 'RAN assistance information' and can include, for example, threshold values for use in the access network selection and/or traffic steering procedure. The threshold values could be for metrics such as 3GPP signal related metrics such as reference signal received power (RSRP) and reference signal received quality (RSRQ) in LTE or common pilot channel (CPICH) received signal code power (RSCP) and CPICH Ec/No in HSPA, WLAN signal related metrics such as Received Signal Strength Indicator (RSSI), Received Channel Power Indicator (RCPI), Received Signal to Noise Indicator (RSNI), WLAN load/utilisation, WLAN backhaul load/capacity, etc. In an LTE network, a terminal device can receive the dedicated parameters in an RRCConnectionReconfiguration message from a network node.

The parameters are 'dedicated' parameters in the sense that they are parameters that were provided to the terminal device by the (3GPP/cellular) communication network using a dedicated signalling connection to the terminal device), and are contrasted with 'broadcast parameters' which are parameters that are provided by the communication network to all terminal devices over a broadcast channel. For example, in LTE, the broadcast parameters can be broadcast in System Information Blocks, SIBs, that are regularly broadcast by the network nodes via the Physical Downlink Shared Channel (PDSCH). In some cases the dedicated parameters provided to a particular terminal device are the same as the dedicated parameters provided to other terminal devices (i.e. the dedicated parameters are common to multiple terminal devices), but in other cases the dedicated parameters provided to a particular terminal device are specific to that terminal device (i.e. they may be different to the dedicated parameters provided to other terminal devices).

In accordance with the various solutions presented below, if a connection request sent by a terminal device to a network node (e.g. a base station, NodeB, eNodeB, etc.) in the cellular communication network (e.g. to establish a voice call or data session) is rejected, the terminal device will discard the dedicated parameters so that they are no longer applied in the access network selection and/or traffic steering procedure and/or apply broadcast parameters in the access network selection and/or traffic steering procedure. It will be appreciated that in some implementations the solutions presented below are applied only on rejection of a connection request sent as a result of evaluating an access network selection and/or traffic steering or routing procedure. In other implementations, the solutions presented below could be used on the rejection of any connection request (i.e. sent as a result of evaluating an access network selection and/or traffic steering or routing procedure or for any other reason).

Although the embodiments discussed below relate to the operation of a terminal device in an LTE communication network, it will be appreciated that the embodiments are also applicable to other types of communication network, such as a UMTS communication network.

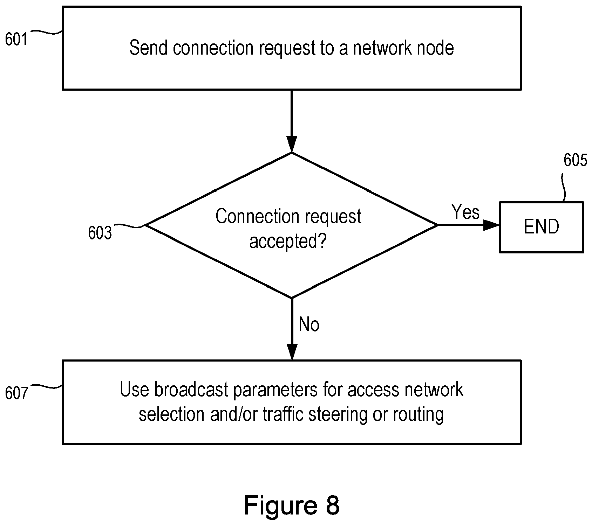

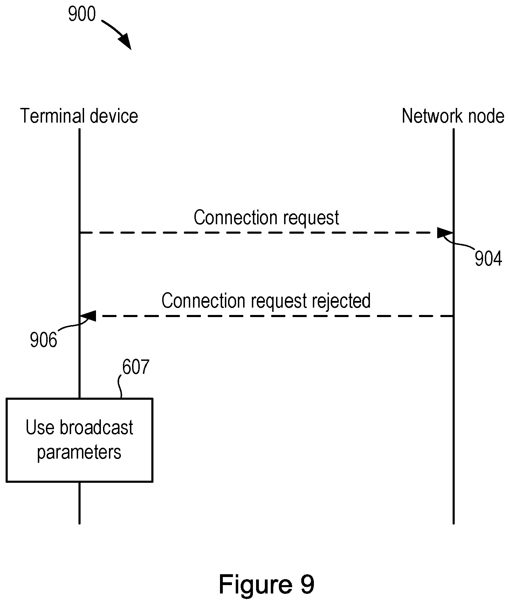

A first specific embodiment is shown in the flow chart of Figure 8 and Figure 9 illustrates the signalling between a terminal device and a network node in this embodiment. In this embodiment, following an unsuccessful attempt to establish a connection to a network node in the cellular network, the terminal device starts applying or using broadcast parameters (broadcast RAN assistance parameters) in the access network selection and/or traffic steering procedure.

Thus, in a first step, step 601, the terminal device sends a connection request to a network node (e.g. a base station, NodeB, eNodeB, etc.). The connection request can be a connection setup request, such as an RRCConnectionRequest. The connection request is represented by signal 904 in Figure 9.

If the connection request is accepted (step 603), the method ends (step 605) - as far as this specific embodiment is concerned. That is, the terminal device proceeds with establishing a connection to the network node in the conventional manner.

If the connection request is rejected (step 603), for example if the terminal device receives a connection reject message from the network node (indicated by signal 906), such as an RRCConnectionReject message, then the terminal device is configured to use broadcast parameters (broadcast RAN assistance parameters) for access network selection and/or traffic steering or routing between the cellular network and WLAN (step 607). The terminal device will have previously obtained or obtained upon or shortly after reception of connection reject the broadcast parameters from system information broadcast by the or another network node (for example the network node that was previously serving the terminal device).

One possible way of implementing this embodiment in an LTE communication network is illustrated in Table 1 below. Table 1 illustrates the actions to be taken by a UE on reception of an RRCConnectionReject message and is taken from section 5.3.3.8 of the document 3GPP TS36.331 v12.1.0 (2014-03) "Evolved Universal Terrestrial Radio Access (E-UTRA); Radio Resource Control (RRC); Protocol specification (Release 12)". The underlined portion of text instructs the terminal device to start applying the broadcast RAN assistance parameters upon connection reject.

**Table 1**

| |
|---|
| 5.3.3.8 Reception of the *RRCConnectionReject* by the UE |
| The UE shall: |
| 1> stop timer T300; |
| 1> reset MAC and release the MAC configuration; |
| 1> start timer T302, with the timer value set to the *waitTime;* |
| 1> if the *extendedWaitTime* is present and the UE supports delay tolerant access: |
| 2> forward the *extendedWaitTime* to upper layers; |
| 1> if *deprioritisationReq* is included and the UE supports RRC Connection Reject with deprioritisation: |
| 2> start or restart timer T325 with the timer value set to the *deprioritisationTimer* signalled; |
| 2> store the *deprioritisationReq* until T325 expiry; |
| NOTE: The UE stores the deprioritisation request irrespective of any cell reselection absolute priority assignments (by dedicated or common signalling) and regardless of RRC connections in E-UTRAN or other RATs unless specified otherwise. |
| 1> inform upper layers about the failure to establish the RRC connection and that access barring for mobile originating calls, mobile originating signalling, mobile terminating access and mobile originating CS fallback is applicable, upon which the procedure ends; |
| 1> apply RAN assistance parameters in system information. |

In some implementations, when starting to apply broadcast parameters in step 607, the terminal device may discard the (or any) dedicated parameters received via dedicated signalling. In other implementations, when starting to apply broadcast parameters in step 607, the terminal device may store the dedicated parameters for possible future use and start reusing the stored parameters after a certain (configurable) time period or upon occurrence of a certain event. The event could be, for example, if the terminal device reconnects to the network node that originally provided the dedicated parameters to the terminal device, if the current time is within a specified time window (e.g. between 10am and 12pm apply the dedicated thresholds), or if the user of the terminal device tries to access certain types of services (e.g. if accessing a video streaming service, apply the dedicated thresholds).

In a further implementation, the terminal device could be configured to keep applying dedicated parameters received by dedicated signalling if there are no corresponding RAN assistance parameters being broadcast by the network node (broadcast parameters) that can be applied. In that case, the underlined text in Table 1 could be replaced by "1> apply RAN assistance parameters in system information, if any."

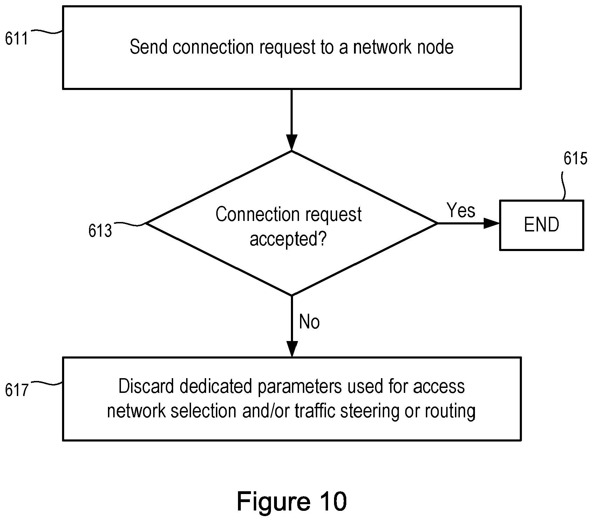

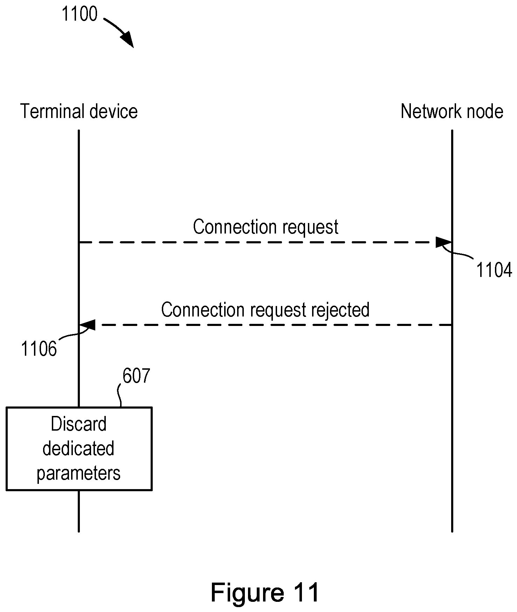

A second specific embodiment is shown in the flow chart of Figure 10 and Figure 11 illustrates the signalling between a terminal device and a network node in this embodiment. In this embodiment, following an unsuccessful attempt to establish a connection to a network node in the cellular network, the terminal device discards the or any dedicated parameters previously used for the access network selection and/or traffic steering procedure.

Thus, in a first step, step 611, the terminal device sends a connection request to a network node (e.g. a base station, NodeB, eNodeB, etc.). The connection request can be a connection setup request, such as an RRCConnectionRequest. This is represented by signal 1104 in Figure 11.

If the connection request is accepted (step 613), the method ends (step 615) - as far as this specific embodiment is concerned. That is, the terminal device proceeds with establishing a connection to the network node in the conventional manner.

If the connection request is rejected (step 613), for example if the terminal device receives a connection reject message from the network node (indicated by signal 1106), such as an RRCConnectionReject message, then the terminal device is configured to discard dedicated parameters (dedicated RAN assistance parameters) used for the access network selection and/or traffic steering or routing between the cellular network and WLAN (step 617).

One possible way of implementing this embodiment in an LTE communication network is illustrated in Table 2 below. Table 2 illustrates the actions to be taken by a UE on reception of an RRCConnectionReject message and is taken from section 5.3.3.8 of the document 3GPP TS36.331 v12.1.0 (2014-03) "Evolved Universal Terrestrial Radio Access (E-UTRA); Radio Resource Control (RRC); Protocol specification (Release 12)". The underlined portion of text instructs the terminal device to discard the dedicated RAN assistance parameters (that are received in an earlier RRCConnectionReconfiguration message) upon connection reject.

**Table 2**

| |
|---|
| 5.3.3.8 Reception of the *RRCConnectionReject* by the UE |
| The UE shall: |
| 1> stop timer T300; |
| 1> reset MAC and release the MAC configuration; |
| 1> start timer T302, with the timer value set to the *waitTime;* |
| 1> if the *extendedWaitTime* is present and the UE supports delay tolerant access: |
| 2> forward the *extendedWaitTime* to upper layers; |
| 1> if *deprioritisationReq* is included and the UE supports RRC Connection Reject with deprioritisation: |
| 2> start or restart timer T325 with the timer value set to the *deprioritisationTimer* signalled; |
| 2> store the *deprioritisationReq* until T325 expiry; |
| NOTE: The UE stores the deprioritisation request irrespective of any cell reselection absolute priority assignments (by dedicated or common signalling) and regardless of RRC connections in E-UTRAN or other RATs unless specified otherwise. |
| 2> inform upper layers about the failure to establish the RRC connection and that access barring for mobile originating calls, mobile originating signalling, mobile terminating access and mobile originating CS fallback is applicable, upon which the procedure ends; |
| 2> discard dedicated RAN assistance parameters received in earlier *RRCConnectionReconfiguration* message, if any. |

In some implementations, when discarding the or any dedicated parameters used for access network selection and/or traffic steering or routing (step 617), the terminal device can be configured to start applying or using broadcast parameters in the access network selection and/or traffic steering procedure. The terminal device will have previously obtained the broadcast parameters from system information broadcast by the or another network node (for example the network node that was previously serving the terminal device).

In a further implementation, the terminal device could be configured to determine if there are any corresponding RAN assistance parameters being broadcast by the network node that can be applied, and if no parameters are being broadcast, the terminal device can continue to apply or use the dedicated parameters. In this case, the application or use of the dedicated parameters can continue until the terminal device receives a new set of dedicated parameters for use in the access network selection and/or traffic steering procedure, or until the expiry of a (configurable) time period, at which point the dedicated parameters are discarded.

A third specific embodiment applies to the situation where the broadcast RAN assistance parameters do not include the same or exactly the same parameters as the dedicated RAN assistance parameters. For example, the network node may broadcast only LTE signal strength (RSRP) and WLAN signal strength (RCPI) thresholds, but communicate LTE signal quality (RSRQ) and WLAN signal quality (RSNI) thresholds via dedicated signalling.

In this scenario, a terminal device may be configured to apply the whole broadcast set of RAN assistance parameters (as in the first specific embodiment above) and/or discard the dedicated RAN assistance parameters (as in the second specific embodiment above). In the example described above, on rejection of a connection request, the terminal device would discard the RSRQ and RSNI thresholds received via dedicated signalling and start applying the broadcasted RSRP and RCPI thresholds instead. This embodiment ensures that the terminal device is not restricted to performing mobility between two RATs by any RAN assistance parameters received with dedicated signalling, after it has started to apply broadcasted parameters and/or discarded corresponding dedicated parameters, and also ensures that the terminal device does not apply part of the broadcast parameters and part of the dedicated parameters in an access network selection and/or traffic steering procedure.

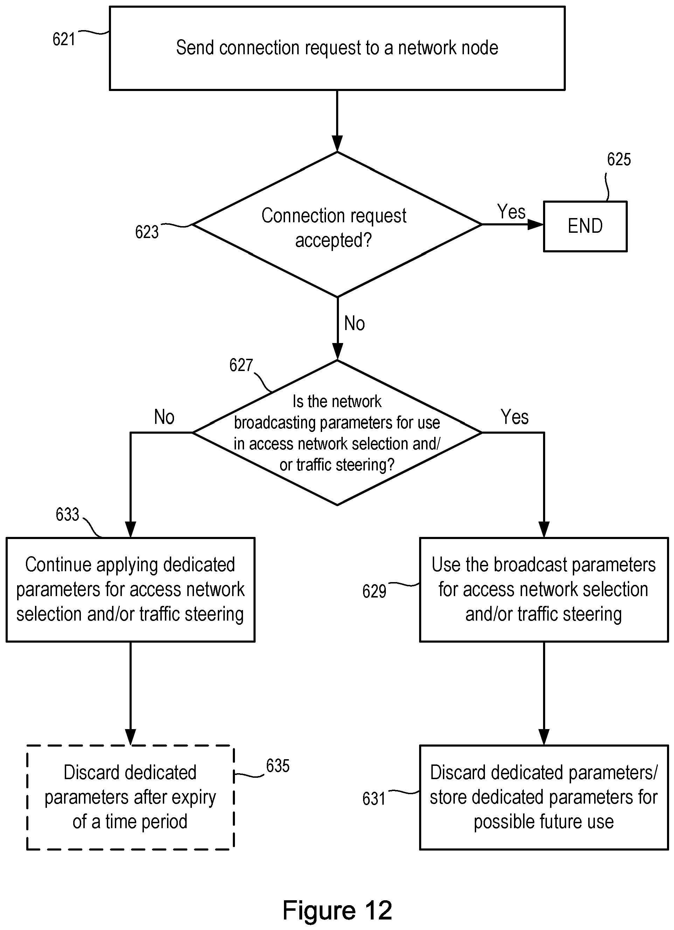

The flow chart in Figure 12 illustrates a general method of operating a terminal device according to the above specific embodiments.

In a first step, step 621, the terminal device sends a connection request to a network node (e.g. a base station, NodeB, eNodeB, etc.). The connection request can be a connection setup request, such as an RRCConnectionRequest.

If the connection request is accepted (step 623), the method ends (step 625) - as far as this general embodiment is concerned. That is, the terminal device proceeds with establishing a connection to the network node in the conventional manner.

If the connection request is rejected (step 623), for example if the terminal device receives a connection reject message from the network node, such as an RRCConnectionReject message, then the terminal device determines if the network is broadcasting parameters for use in access network selection and/or traffic steering or if the terminal device has broadcast parameters available to use in an access network selection and/or traffic steering procedure (step 627). Step 627 can comprise receiving and reading a system information broadcast from the network node, checking a memory for a stored set of broadcast parameters, etc.

If the network is broadcasting parameters and/or the terminal device otherwise has broadcast parameters available for use in access network selection and/or traffic steering, then the terminal device uses the broadcast parameters (broadcast RAN assistance parameters) for access network selection and/or traffic steering or routing between the cellular network and WLAN (step 629) and the terminal device discards the or any previously received dedicated parameters, or alternatively stores the or any previously received dedicated parameters for possible future use (step 631).

If the network is not broadcasting parameters and the terminal device does not have broadcast parameters available for use in access network selection and/or traffic steering, then the terminal device continues to apply dedicated parameters for access network selection and/or traffic steering (step 633).

It will be appreciated that in all of the above embodiments, a timer T350 can still be used to determine when to discard or otherwise stop using previously received dedicated parameters after a terminal device enters an idle mode, irrespective of whether the terminal device sends a connection request, and/or receives a rejection of the connection request. Thus, step 635 indicates that, if the terminal device continues to apply dedicated parameters (in step 633), the dedicated parameters can be discarded after expiry of a time period.

The above embodiments assume that the terminal device will start applying the broadcast parameters (with or without discarding the dedicated parameters) upon the rejection of a connection request. However, in some scenarios it may not be desirable for the terminal device to do this. Thus, the or a network node (a base station, NodeB, eNodeB or higher level node, such as an RNC or MME) may want to configure how the terminal device behaves concerning the handling of broadcast and dedicated RAN assistance parameters upon connection reject.

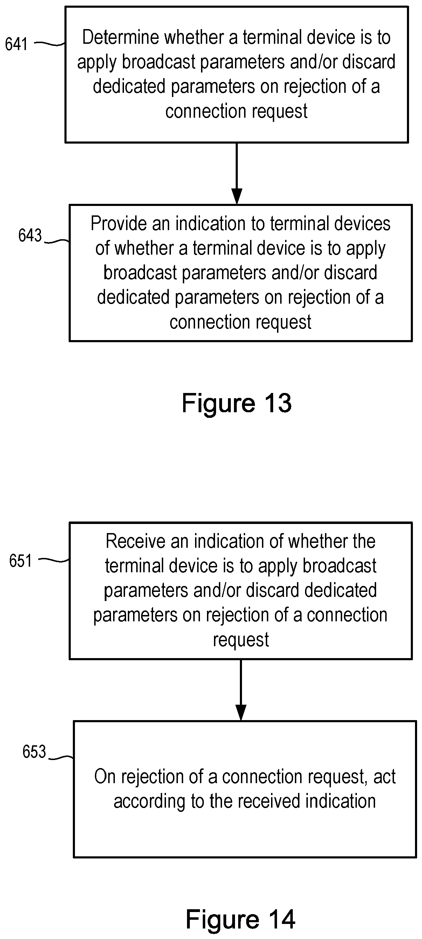

Thus, in one embodiment, a network node can provide an indication to the terminal device that indicates whether or not it should start applying broadcast RAN assistance parameters and/or whether or not it should discard dedicated RAN assistance parameters. A flow chart illustrating this embodiment is shown in Figure 13. Thus, in step 641, the network node determines whether a (or a plurality or all) terminal device is to apply broadcast parameters and/or discard dedicated parameters on rejection of a connection request. Then, in step 643, the network node provides an indication to a or the terminal devices of whether or not the terminal device is to apply broadcast parameters and/or whether or not to discard dedicated parameters on rejection of a connection request. The method in Figure 13 can take place before the terminal device performs any of the methods in Figures 8, 10 or 12.

The flow chart in Figure 14 illustrates a corresponding method of operating a terminal device. In step 651, the terminal device receives an indication from the network node of whether the terminal device should apply broadcast parameters and/or discard dedicated parameters on rejection of a connection request. Then, in step 653, on rejection of a connection request (by the or another network node), the terminal device acts according to the received indication. It will be appreciated that step 651 will take place prior to steps 601, 611, and 621 in Figures 8, 10 and 12 respectively, and step 653 corresponds to the action taken in step 607, 617 or 629/631.

The indication provided by the network node in step 643 can be provided to the terminal device(s) either in a broadcast or dedicated manner. In the former case, a certain flag (or other indicator) can be used in the System Information that indicates to all terminal devices whether or not they should start applying broadcast assistance parameters and/or discard dedicated parameters upon connection request rejection.

There are two main options for the latter case (i.e. providing the indication in step 643 in dedicated signalling):
1. Earlier configuration: The indication can be included in a dedicated message that is sent to the terminal device (for example *RRCConnectionReconfiguration)* while the terminal device is still in connected mode to indicate to the terminal device whether or not to apply broadcast RAN assistance parameters upon connection reject and/or whether or not to discard dedicated RAN assistance parameters upon connection reject. It may be so that this indication is signalled to the terminal device in a message that also contains the dedicated thresholds (which may be the RRCConnectionReconfiguration message), or a message signalled separately from the dedicated thresholds.
2. Configuration in connection reject: The indication can be placed in the *RRCConnectionReject* message to indicate to the terminal device whether or not to apply broadcast RAN assistance parameters upon connection reject and/or whether or not to discard dedicated RAN assistance parameters upon connection reject.

The indication can be set to one value to indicate to the terminal device that the terminal device should (or shall) to apply broadcast RAN assistance parameters and/or to discard dedicated RAN assistance parameters, and to another value to indicate it should (or shall) not apply broadcast RAN assistance parameters upon connection reject and/or not discard dedicated RAN assistance parameters upon connection reject.

If the network node decides that the terminal device should (or shall) not apply broadcast RAN assistance parameters and/or should (or shall) not discard dedicated RAN assistance parameters, another alternative to provide the indication to the terminal device is not to include the flag at all, which could then be interpreted by the terminal device as that it should (or shall) not apply broadcast RAN assistance parameters and/or should (or shall) not discard dedicated RAN assistance parameters. In case the terminal device is already applying broadcasted RAN assistance parameters for access network selection and/or traffic steering and the network node does not provide an indication that the terminal device shall apply broadcast RAN assistance parameters, the default behaviour could be that the terminal device keeps applying broadcast parameters, i.e. the indication would then only be applicable to terminal devices which are applying dedicated RAN assistance parameters.

Table 3 is an example of how an indication can be provided to a terminal device in an RRCConnectionReject message and is taken from section 5.3.3.8 of the document 3GPP TS36.331 v12.1.0 (2014-03) "Evolved Universal Terrestrial Radio Access (E-UTRA); Radio Resource Control (RRC); Protocol specification (Release 12)". The underlined portion of text instructs the terminal device to apply broadcast parameters if applyBroadcastWLAN-params is included in the RRCConnectionReject message.

**Table 3**

| |
|---|
| 5.3.3.8 Reception of the *RRCConnectionReject* by the UE |
| The UE shall: |
| 1> stop timer T300; |
| 1> reset MAC and release the MAC configuration; |
| 1> start timer T302, with the timer value set to the *waitTime;* |
| 1> if the *extendedWaitTime* is present and the UE supports delay tolerant access: |
| 2> forward the *extendedWaitTime* to upper layers; |
| 1> if *deprioritisationReq* is included and the UE supports RRC Connection Reject with deprioritisation: |
| 2> start or restart timer T325 with the timer value set to the *deprioritisationTimer* signalled; |
| 2> store the *deprioritisationReq* until T325 expiry; |
| NOTE: The UE stores the deprioritisation request irrespective of any cell reselection absolute priority assignments (by dedicated or common signalling) and regardless of RRC connections in E-UTRAN or other RATs unless specified otherwise. |
| 1> inform upper layers about the failure to establish the RRC connection and that access barring for mobile originating calls, mobile originating signalling, mobile terminating access and mobile originating CS fallback is applicable, upon which the procedure ends; |
| 1> if *applyBroadcastWLAN-params* is included: |
| 2> apply WLAN parameters in system information. |

Table 4 illustrates how the parameter applyBroadcastWLAN-params can be signalled. The content of Table 4 is taken from the document 3GPP TS36.331 v12.1.0 (2014-03) "Evolved Universal Terrestrial Radio Access (E-UTRA); Radio Resource Control (RRC); Protocol specification (Release 12)".

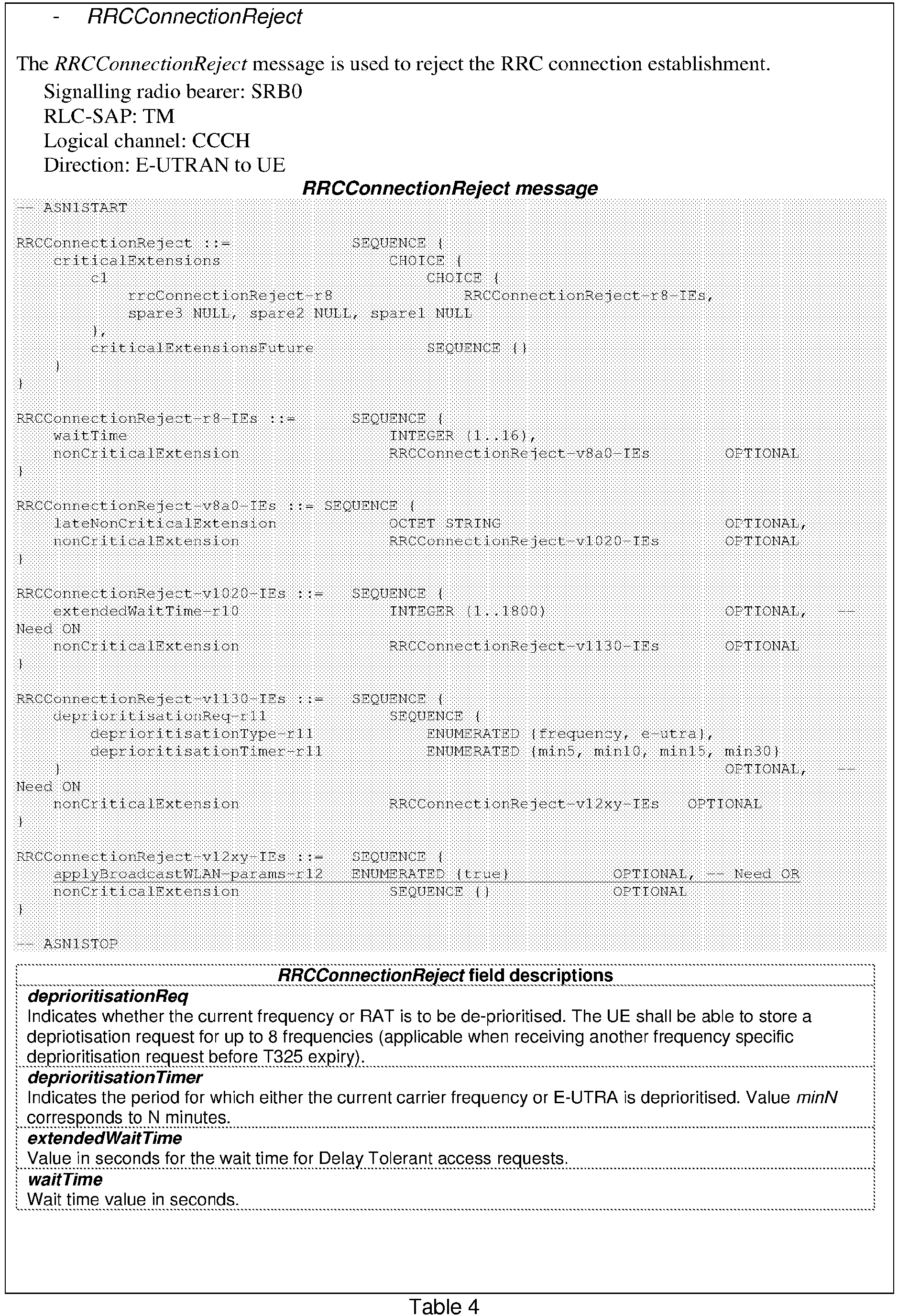

Thus, the above embodiments provide a mechanism to avoid a terminal device from automatically applying dedicated RAN assistance parameters after a rejection of a connection request. As noted above, these embodiments can be used where a terminal device has received dedicated parameters from a first cell and is now trying to connect to a second cell, and also in cases where the terminal device remains within the coverage of the first cell after entering an idle state and the terminal device tries to establish a connection with the first cell before the timer (that is used to determine how long to continue using dedicated parameters after a terminal device enters an idle state) expires, but the conditions in the first cell have changed drastically during this duration (e.g. from low/medium load to very high load), rendering the dedicated thresholds irrelevant or redundant.

The above embodiments also provide a mechanism for the network to control the terminal device behaviour with respect to applying dedicated RAN assistance parameters after rejection of a connection request.

It will be appreciated by the person of skill in the art that various modifications may be made to the above described embodiments without departing from the scope of the teaching of the present application. For example, it will be readily appreciated that although the above embodiments are described with reference to parts of a 3GPP network, embodiments will also be applicable to like networks, such as a successor of any current 3GPP network, having like functional components.

## Claims

1. A method of operating a wireless terminal device in a communication network, the method comprising, on receiving a rejection of a connection request to a network node,
(i) receiving, from the network node, an indication of whether the terminal device is to apply broadcast parameters from the network node or from another network node and discard dedicated parameters received from the network node using dedicated signalling;
(ii) using the broadcast parameters that have been broadcast from the network node or from another network node in an access network selection and/or traffic steering or routing procedure (607) between networks operating according to different radio access technologies, if so indicated in the indication; and
(iii) discarding dedicated parameters that have been received from the network node using dedicated signalling, the dedicated parameters being for use in the access network selection and/or traffic steering or routing procedure (617) between networks operating according to different radio access technologies, if so indicated in the indication.

2. The method of any preceding claim, wherein the method is performed on receiving the rejection of a connection request, the connection request being sent as a result of evaluating an access network selection and/or traffic steering or routing procedure.

3. A terminal device (400) for use in a communication network (200), the terminal device (400) comprising processing circuitry (410) that is configured to, on receiving a rejection of a connection request to a network node (500),
(i) receive, from a network node, an indication of whether the terminal device is to apply broadcast parameters from the network node or from another network node (500) and discard dedicated parameters received from the network node (500) using dedicated signalling;
(ii) use broadcast parameters that have been broadcast from the network node or from another network node (500) in an access network selection and/or traffic steering or routing procedure between networks operating according to different radio access technologies, if so indicated in the indication; and
(iii) discard dedicated parameters that have been received from the network node (500) using dedicated signalling, the dedicated parameters being for use in the access network selection and/or traffic steering or routing procedure between networks operating according to different radio access technologies, if so indicated in the indication.

4. The terminal device (400) of claim 3, wherein the processing circuitry (410) is further configured to monitor for the expiry of the time period or for the occurrence of the certain event.

5. The terminal device (400) of any of claims 3-4, wherein the processing circuitry (410) is configured to:
use broadcast parameters that have been broadcast from the network node or from another network node (500) in the access network selection and/or traffic steering or routing procedure if the network is broadcasting broadcast parameters or if the terminal device (400) has broadcast parameters available for use in the access network selection and/or traffic steering or routing procedure; and
apply or use dedicated parameters that have been received from a network node (500) using dedicated signalling in the access network selection and/or traffic steering or routing procedure if the network is not broadcasting broadcast parameters and the terminal device (400) does not have broadcast parameters available.

6. The terminal device (400) of claim 5, wherein the processing circuitry (410) is further configured to discard or stop the use of the dedicated parameters on expiry of a time period.

7. The terminal device (400) of any of claims 3 to 6, further comprising transceiver circuitry (420) that is configured to receive an indication from a network node (500) indicating whether the terminal device (400)/processing circuitry (410) should use the broadcast parameters and discard the dedicated parameters on rejection of a connection request.

8. A method of operating a network node in a communication network, the method comprising:
determining a desired behaviour of a terminal device with respect to an access network selection and/or traffic steering or routing procedure between networks operating according to different radio access technologies in the event that a connection request by the terminal device to a network node is rejected; and
providing an indication of the desired behaviour to the terminal device, wherein the behaviour comprises applying broadcast parameters that have been broadcast from the network node or from another network node (500) in the access network selection and/or traffic steering or routing procedure; and discarding dedicated parameters that have been received from the network node using dedicated signalling, the dedicated parameters being for use in the access network selection and/or traffic steering or routing procedure.

9. The method of claim 8, wherein the indication is provided in dedicated signalling.

10. The method of claim 8, wherein the indication is provided in broadcast signalling.

11. The method of claim 8, wherein the indication is included in a rejection message of the connection request.

12. A network node (500) for use in a communication network, the network node (500) comprising:
processing circuitry (510) configured to determine a desired behaviour of a terminal device (400) with respect to an access network selection and/or traffic steering or routing procedure between networks operating according to different radio access technologies in the event that a connection request by the terminal device (400) to a network node (500) is rejected; and
an interface or transceiver circuitry (540) for providing an indication of the desired behaviour to the terminal device (400), wherein the behaviour comprises applying or not applying broadcast parameters that have been broadcast from the or another network node (500) in the access network selection and/or traffic steering or routing procedure; and discarding or not discarding dedicated parameters that have been received from the network node using dedicated signalling, the dedicated parameters being for use in the access network selection and/or traffic steering or routing procedure.

13. The network node of claim 12, wherein the indication is provided in dedicated signalling.

14. The network node of claim 12, wherein the indication is provided in broadcast signalling.

15. The network node of claim 12, wherein the indication is included in a rejection message of the connection request.

16. A computer program product having computer readable code embodied therein, the computer readable code being configured such that, on execution of the computer readable code by a computer or suitable processing circuitry, the computer or suitable processing circuitry is caused to perform the method of any of claims 1 to 2 when said computer or suitable processing circuitry is comprised in a wireless terminal or claims 8 to 11 when said computer or suitable processing circuitry is comprised in a network node.

## Patentansprüche

1. Verfahren zum Betreiben einer drahtlosen Endgerätvorrichtung in einem Kommunikationsnetz, wobei das Verfahren beim Empfangen einer Ablehnung einer Verbindungsanforderung an einen Netzknoten umfasst:
(i) Empfangen einer Angabe von dem Netzknoten, ob die Endgerätvorrichtung Broadcast-Parameter von dem Netzknoten oder von einem anderen Netzknoten anwenden und dedizierte Parameter, die von dem Netzknoten empfangen wurden, mittels dedizierter Signalisierung verwerfen soll;
(ii) Verwenden der Broadcast-Parameter, die von dem Netzknoten oder von einem anderen Netzknoten in einem Zugangsnetz-Auswahl- und/oder Verkehrslenkungs- oder Routingverfahren (607) zwischen Netzwerken, die nach verschiedenen Funkzugangstechnologien arbeiten, gesendet wurden, wenn dies in der Angabe angegeben ist; und
(iii) Verwerfen von dedizierten Parametern, die von dem Netzknoten unter Verwendung dedizierter Signalisierung empfangen wurden, wobei die dedizierten Parameter zur Verwendung beim Zugangsnetz-Auswahl- und/oder Verkehrslenkungs- oder Routingverfahren (617) zwischen Netzen, die nach verschiedenen Funkzugangstechnologien arbeiten, bestimmt sind, wenn dies in der Angabe angegeben ist.

2. Verfahren gemäß einem vorangegangenen Anspruch, wobei das Verfahren beim Empfangen der Ablehnung einer Verbindungsanforderung durchgeführt wird, wobei die Verbindungsanforderung als Ergebnis der Auswertung eines Zugangsnetz-Auswahl- und/oder Verkehrslenkungs- oder Routingverfahrens gesendet wird.

3. Endgerätvorrichtung (400) zur Verwendung in einem Kommunikationsnetz (200), wobei die Endgerätvorrichtung (400) eine Verarbeitungsschaltung (410) umfasst, die dazu konfiguriert ist, beim Empfangen einer Ablehnung einer Verbindungsanforderung an einen Netzknoten (500),
(i) eine Angabe von einem Netzknoten zu empfangen, ob die Endgerätvorrichtung Broadcast-Parameter von dem Netzknoten oder von einem anderen Netzknoten (500) anwenden und dedizierte Parameter, die von dem Netzknoten (500) unter Verwendung einer dedizierten Signalisierung empfangen wurden, verwerfen soll;
(ii) Broadcast-Parameter, die von dem Netzknoten oder von einem anderen Netzknoten (500) gesendet wurden, in einem Zugangsnetz-Auswahl- und/oder Verkehrslenkungs- oder Routingverfahren zwischen Netzen zu verwenden, die nach verschiedenen Funkzugangstechnologien arbeiten, wenn dies in der Angabe angegeben ist; und
(iii) dedizierte Parameter, die von dem Netzknoten (500) unter Verwendung einer dedizierten Signalisierung empfangen wurden, zu verwerfen, wobei die dedizierten Parameter zur Verwendung in dem Zugangsnetz-Auswahl- und/oder Verkehrslenkungs- oder Routingverfahren zwischen Netzen, die nach verschiedenen Funkzugangstechnologien arbeiten, bestimmt sind, wenn dies in der Angabe angegeben ist.

4. Endgerätvorrichtung (400) nach Anspruch 3, wobei die Verarbeitungsschaltung (410) ferner dazu konfiguriert ist, den Ablauf der Zeitspanne oder das Eintreten des bestimmten Ereignisses zu überwachen.

5. Endgerätvorrichtung (400) nach einem der Ansprüche 3-4, wobei die Verarbeitungsschaltung (410) konfiguriert ist zum:
Verwenden von Broadcastparametern, die von dem Netzknoten oder von einem anderen Netzknoten (500) in dem Zugangsnetz-Auswahl- und/oder Verkehrslenkungs- oder Routingverfahren gesendet wurden, wenn das Netzwerk Broadcastparameter sendet oder wenn die Endgerätvorrichtung (400) Broadcastparameter aufweist, die zur Verwendung in dem Zugangsnetz-Auswahl- und/oder Verkehrslenkungs- oder Routingverfahren verfügbar sind; und
Anwenden oder Verwenden von dedizierten Parametern, die von einem Netzknoten (500) unter Verwendung von dedizierten Signalisierungen empfangen wurden, im Zugangsnetz-Auswahl- und/oder Verkehrslenkungs- oder Routingverfahren, wenn das Netzwerk keine Broadcast-Parameter sendet und die Endgerätvorrichtung (400) über keine Broadcast-Parameter verfügt.

6. Endgerätvorrichtung (400) nach Anspruch 5, wobei die Verarbeitungsschaltung (410) ferner dazu konfiguriert ist, die Verwendung der dedizierten Parameter nach Ablauf einer Zeitspanne zu verwerfen oder zu stoppen.

7. Endgerätvorrichtung (400) nach einem der Ansprüche 3 bis 6, ferner umfassend eine Sender-Empfängerschaltung (420), die dazu konfiguriert ist, eine Angabe von einem Netzknoten (500) zu empfangen, die angibt, ob die Endgerätvorrichtung (400)/Verarbeitungsschaltung (410) bei Ablehnung einer Verbindungsanforderung die Broadcast-Parameter verwenden und die dedizierten Parameter verwerfen sollte.

8. Verfahren zum Betreiben eines Netzknotens in einem Kommunikationsnetz, wobei das Verfahren umfasst:
Bestimmen eines gewünschten Verhaltens einer Endgerätvorrichtung in Bezug auf ein Zugangsnetz-Auswahl- und/oder Verkehrslenkungs- oder Routingverfahren zwischen Netzwerken, die nach verschiedenen Funkzugangstechnologien arbeiten, für den Fall, dass eine Verbindungsanforderung durch die Endgerätvorrichtung an einen Netzknoten abgelehnt wird; und
Bereitstellen einer Angabe des gewünschten Verhaltens an die Endgerätvorrichtung, wobei das Verhalten das Anwenden von Broadcast-Parametern umfasst, die von dem Netzknoten oder von einem anderen Netzknoten (500) in dem Zugangsnetz-Auswahl- und/oder Verkehrslenkungs- oder Routingverfahren gesendet wurden; und Verwerfen von dedizierten Parametern, die von dem Netzknoten unter Verwendung dedizierter Signalisierung empfangen wurden, wobei die dedizierten Parameter für die Verwendung in dem Zugangsnetz-Auswahl- und/oder Verkehrslenkungs- oder Routingverfahren bestimmt sind.

9. Verfahren nach Anspruch 8, wobei die Angabe als dedizierte Signalisierung bereitgestellt wird.

10. Verfahren nach Anspruch 8, wobei die Angabe als Broadcast-Signalisierung bereitgestellt wird.

11. Verfahren nach Anspruch 8, wobei die Angabe in einer Ablehnungsnachricht der Verbindungsanforderung enthalten ist.

12. Netzknoten (500) zur Verwendung in einem Kommunikationsnetz, wobei der Netzknoten (500) umfasst:
Verarbeitungsschaltung (510), die dazu konfiguriert ist, ein gewünschtes Verhalten einer Endgerätvorrichtung (400) in Bezug auf ein Zugangsnetz-Auswahl- und/oder Verkehrslenkungs- oder Routingverfahren zwischen Netzwerken zu bestimmen, die nach verschiedenen Funkzugriffstechnologien arbeiten, wenn eine Verbindungsanforderung durch die Endgerätvorrichtung (400) an einen Netzknoten (500) abgelehnt wird; und
eine Schnittstelle oder Sender-Empfängerschaltung (540) zum Bereitstellen einer Angabe des gewünschten Verhaltens an die Endgerätvorrichtung (400), wobei das Verhalten das Anwenden oder Nicht-Anwenden von Broadcast-Parametern umfasst, die von dem oder einem anderen Netzknoten (500) in dem Zugangsnetz-Auswahl- und/oder Verkehrslenkungs- oder Routingverfahren gesendet wurden; und Verwerfen oder Nichtverwerfen von dedizierten Parametern, die von dem Netzknoten unter Verwendung dedizierter Signalisierung empfangen wurden, wobei die dedizierten Parameter für die Verwendung im Zugangsnetz-Auswahl- und/oder Verkehrslenkungs- oder Routingverfahren bestimmt sind.

13. Netzknoten nach Anspruch 12, wobei die Angabe als eine dedizierte Signalisierung bereitgestellt ist.

14. Netzknoten nach Anspruch 12, wobei die Angabe als Broadcast-Signalisierung bereitgestellt ist.

15. Netzknoten nach Anspruch 12, wobei die Angabe in einer Ablehnungsnachricht der Verbindungsanforderung enthalten ist.

16. Computerprogrammprodukt mit darin enthaltenem computerlesbaren Code, wobei der computerlesbare Code so konfiguriert ist, dass bei der Ausführung des computerlesbaren Codes durch einen Computer oder eine geeignete Verarbeitungsschaltung der Computer oder eine geeignete Verarbeitungsschaltung veranlasst wird, das Verfahren nach einem der Ansprüche 1 bis 2 durchzuführen, wenn der Computer oder die geeignete Verarbeitungsschaltung in einem drahtlosen Endgerät enthalten ist, oder nach den Ansprüchen 8 bis 11, wenn der Computer oder die geeignete Verarbeitungsschaltung in einem Netzknoten enthalten ist.

## Revendications

1. Procédé de fonctionnement d'un dispositif terminal sans fil dans un réseau de communication, le procédé comprenant, à la réception d'un rejet d'une demande de connexion à un nœud de réseau,
(i) la réception, depuis le nœud de réseau, d'une indication indiquant si le dispositif terminal doit appliquer des paramètres de diffusion provenant du nœud de réseau ou d'un autre nœud de réseau et écarter des paramètres dédiés reçus du nœud de réseau en utilisant une signalisation dédiée ;
(ii) l'utilisation des paramètres de diffusion qui ont été diffusés depuis le nœud de réseau ou depuis un autre nœud de réseau dans une procédure de sélection de réseau d'accès et/ou d'orientation ou routage de trafic (607) entre des réseaux fonctionnant selon des technologies d'accès radio différentes, si cela est indiqué dans l'indication ; et
(iii) le fait d'écarter des paramètres dédiés qui ont été reçus depuis le nœud de réseau en utilisant une signalisation dédiée, les paramètres dédiés étant pour utilisation dans la procédure de sélection de réseau d'accès et/ou d'orientation ou routage de trafic (617) entre des réseaux fonctionnant selon des technologies d'accès radio différentes, si cela est indiqué dans l'indication.

2. Procédé selon l'une quelconque des revendications précédentes, dans lequel le procédé est mis en œuvre à la réception du rejet d'une demande de connexion, la demande de connexion étant envoyée en conséquence de l'évaluation d'une procédure de sélection de réseau d'accès et/ou d'orientation ou routage de trafic.

3. Dispositif terminal (400) pour utilisation dans un réseau de communication (200), le dispositif terminal (400) comprenant un circuit de traitement (410) qui est configuré pour, à la réception d'un rejet d'une demande de connexion à un nœud de réseau (500),
(i) recevoir, depuis un nœud de réseau, une indication indiquant si le dispositif terminal doit appliquer des paramètres de diffusion provenant du nœud de réseau ou d'un autre nœud de réseau (500) et écarter des paramètres dédiés reçus depuis le nœud de réseau (500) en utilisant une signalisation dédiée ;
(ii) utiliser des paramètres de diffusion qui ont été diffusés depuis le nœud de réseau ou depuis un autre nœud de réseau (500) dans une procédure de sélection de réseau d'accès et/ou d'orientation ou routage de trafic entre des réseaux fonctionnant selon des technologies d'accès radio différentes, si cela est indiqué dans l'indication ; et
(iii) écarter des paramètres dédiés qui ont été reçus depuis le nœud de réseau (500) en utilisant une signalisation dédiée, les paramètres dédiés étant pour utilisation dans la procédure de sélection de réseau d'accès et/ou d'orientation ou routage de trafic entre des réseaux fonctionnant selon des technologies d'accès radio différentes, si cela est indiqué dans l'indication.

4. Dispositif terminal (400) selon la revendication 3, dans lequel le circuit de traitement (410) est en outre configuré pour surveiller l'expiration de la période de temps ou l'occurrence du certain événement.

5. Dispositif terminal (400) selon l'une quelconque des revendications 3 ou 4, dans lequel le circuit de traitement (410) est configuré pour :
utiliser des paramètres de diffusion qui ont été diffusés depuis le nœud de réseau ou depuis un autre nœud de réseau (500) dans la procédure de sélection de réseau d'accès et/ou d'orientation ou routage de trafic si le réseau diffuse des paramètres de diffusion ou si le dispositif terminal (400) a des paramètres de diffusion disponibles pour utilisation dans la procédure de sélection de réseau d'accès et/ou d'orientation ou routage de trafic ; et
appliquer ou utiliser des paramètres dédiés qui ont été reçus depuis un nœud de réseau (500) en utilisant une signalisation dédiée dans la procédure de sélection de réseau d'accès et/ou d'orientation ou routage de trafic si le réseau ne diffuse pas de paramètres de diffusion et que le dispositif terminal (400) n'a pas de paramètres de diffusion disponibles.

6. Dispositif terminal (400) selon la revendication 5, dans lequel le circuit de traitement (410) est en outre configuré pour écarter ou arrêter l'utilisation des paramètres dédiés à l'expiration d'une période de temps.

7. Dispositif terminal (400) selon l'une quelconque des revendications 3 à 6, comprenant en outre un circuit émetteur-récepteur (420) qui est configuré pour recevoir une indication depuis un nœud de réseau (500) indiquant si le dispositif terminal (400)/circuit de traitement (410) doit utiliser les paramètres de diffusion et écarter les paramètres dédiés lors d'un rejet d'une demande de connexion.

8. Procédé de fonctionnement d'un nœud de réseau dans un réseau de communication, le procédé comprenant :
la détermination d'un comportement souhaité d'un dispositif terminal par rapport à une procédure de sélection de réseau d'accès et/ou d'orientation ou routage de trafic entre des réseaux fonctionnant selon des technologies d'accès radio différentes dans l'éventualité où une demande de connexion par le dispositif terminal vers un nœud de réseau serait rejetée ; et
la fourniture d'une indication du comportement souhaité au dispositif terminal, dans lequel le comportement comprend l'application de paramètres de diffusion qui ont été diffusés depuis le nœud de réseau ou depuis un autre nœud de réseau (500) dans la procédure de sélection de réseau d'accès et/ou d'orientation ou routage de trafic ; et le fait d'écarter des paramètres dédiés qui ont été reçus depuis le nœud de réseau en utilisant une signalisation dédiée, les paramètres dédiés étant pour utilisation dans la procédure de sélection de réseau d'accès et/ou d'orientation ou routage de trafic.

9. Procédé selon la revendication 8, dans lequel l'indication est fournie dans une signalisation dédiée.

10. Procédé selon la revendication 8, dans lequel l'indication est fournie dans une signalisation de diffusion.

11. Procédé selon la revendication 8, dans lequel l'indication est incluse dans un message de rejet de la demande de connexion.

12. Nœud de réseau (500) pour utilisation dans un réseau de communication, le nœud de réseau (500) comprenant :
un circuit de traitement (510) configuré pour déterminer un comportement souhaité d'un dispositif terminal (400) par rapport à une procédure de sélection de réseau d'accès et/ou d'orientation ou routage de trafic entre des réseaux fonctionnant selon des technologies d'accès radio différentes dans l'éventualité où une demande de connexion par le dispositif terminal (400) à un nœud de réseau (500) serait rejetée ; et
un circuit d'interface ou d'émetteur-récepteur (540) pour fournir une indication du comportement souhaité au dispositif terminal (400), dans lequel le comportement comprend l'application ou la non-application de paramètres de diffusion qui ont été diffusés à partir du nœud de réseau ou d'un autre (500) dans la procédure de sélection de réseau d'accès et/ou d'orientation ou routage de trafic ; et le fait d'écarter des paramètres dédiés qui ont été reçus depuis le nœud de réseau en utilisant une signalisation dédiée, les paramètres dédiés étant pour utilisation dans la procédure de sélection de réseau d'accès et/ou d'orientation ou routage de trafic.

13. Nœud de réseau selon la revendication 12, dans lequel l'indication est fournie dans une signalisation dédiée.

14. Nœud de réseau selon la revendication 12, dans lequel l'indication est fournie dans une signalisation de diffusion.

15. Nœud de réseau selon la revendication 12, dans lequel l'indication est incluse dans un message de rejet de la demande de connexion.

16. Produit programme informatique incorporant en son sein un code lisible par ordinateur, le code lisible par ordinateur étant configuré de sorte que, à l'exécution du code lisible par ordinateur par un ordinateur ou un circuit de traitement approprié, l'ordinateur ou le circuit de traitement approprié est amené à mettre en œuvre le procédé selon l'une quelconque des revendications 1 ou 2 lorsque ledit ordinateur ou circuit de traitement approprié est compris dans un terminal sans fil ou les revendications 8 à 11 lorsque ledit ordinateur ou circuit de traitement approprié est compris dans un nœud de réseau.
